# EUROPEAN PATENT SPECIFICATION

(11) **EP 3 130 875 B1**
(45) Date of publication and mention of the grant of the patent: **17.10.2018**
(21) Application number: 16183807.3
(22) Date of filing: 11.08.2016
(51) Int. Cl.: F28D 20/02, F01K 3/18

(54) **SYSTEM FOR STORAGE OF ELECTRICAL ENERGY**
SYSTEM FÜR SPEICHERUNG VON ELEKTRISCHER ENERGIE
SYSTEM POUR LE STOCKAGE D'ENERGIE ELECTRIQUE

(30) Priority: 12.08.2015 NL 2015295
(43) Date of publication of application: 15.02.2017
(73) Proprietor: van Nimwegen, Cornelis Johannes Marie, 5683 RC Best (NL)
(72) Inventor: van Nimwegen, Cornelis Johannes Marie, 5683 RC Best (NL)
(74) Representative: Hylarides, Paul Jacques

(56) References cited:
- EP-A1- 1 577 548
- US-A- 5 384 489
- US-B2- 8 938 966

## Description

The invention relates to a system and method for storing electrical energy, according to respectively claims 1 and 14.

Electricity can be generated in many ways. Electricity can for instance be generated in a traditional electric power station which is provided with one or more generators whereby an alternating voltage can be produced. The generators are driven by steam turbines which are provided with steam by heating water or similar liquid into steam. Heating of water can be realized in different ways. There are electric power stations in which hydrocarbons are burned in order to generate the heat necessary to transpose the water into steam and to drive the steam turbine. Examples hereof are electric power stations fuelled by coal, oil or gas. In other stations use is made of nuclear energy to generate the desired heat to drive the steam turbines. Such traditional electric power stations have the advantage that the required fuel (hydrocarbons, nuclear fission material) is always available under normal conditions. The amount of electrical energy generated by these electric power stations can therefore be adjusted in simple manner to the requirement of the end users at that moment.

A drawback of such traditional electric power stations is that they often have an impact on the surrounding environment, for instance due to the emission of combustion gases during heating of the water. In order to obviate this drawback and/or to achieve more sustainable generation of electrical energy, alternative systems have been developed to generate electrical energy. An example of such an alternative energy generating system is a solar collector station. Such a station can for instance comprise a large number of solar collectors or panels with photovoltaic cells which convert the absorbed sunlight directly into electricity. Another example of an alternative energy generating system is formed by wind turbines. Wind turbines use the energy of the wind to drive a generator, which generator in turn generates electricity.

A drawback of such systems for generating sustainable energy is that the amount of electricity produced by these systems, and particularly the timing of the production, vary greatly. In the case of wind turbines the power produced by the generator depends on the momentary wind speed. Solar collectors in principle produce no energy at night, and the produced power also varies greatly during the day. If the energy produced by the alternative stations is temporarily greater than the amount of energy needed by the users, the extra available energy cannot be usefully employed and is lost. If the alternative power stations do not produce enough energy, i.e. produce less energy than needed by the users at a given moment, the traditional power stations will on the other hand still have to be switched on in order to meet demand. This problem impedes large-scale application of sustainable energy. It is important to find a way to be able to store this sustainable energy temporarily, so that this energy can be made available at a later time. The storage period can be a period in the order of a day, a period in the order of a year or a period of a different duration. Document EP 1 577 548 discloses the preamble of independent claim 1.

Numerous concepts have been developed for temporarily storing electrical energy produced by alternative energy sources. None of these concepts have been found to be successful in practice. Many of the known concepts further have a great environmental impact.

It is an object of the invention to find a system and method wherein the above stated drawbacks are at least partially obviated. It is a further object of the invention to provide a system and method wherein electricity can be stored for a period of at least 24 hours. It is also an object of the invention to provide a system and method wherein electrical energy can be stored for longer periods of several months to potentially a year or longer.

According to an aspect of the invention, at least one of the objects is achieved in a system for storing energy according to claim 1.

In a first mode of use the heating unit can convert electricity into heat because the tubular elements are manufactured from material with a determined electrical resistance, such that an electric current will start to run when an electric voltage is for instance applied over a determined length of a tubular element. The excess electrical energy generated elsewhere can in this way be converted into heat in simple manner, which heat can be stored in the energy storage material for a longer time with an efficiency of 100%. This electric current produces heat which is relinquished via the tube wall to the heat transport fluid present in the tubular elements and also to the surrounding energy storage material through the direct contact between the tubes and this energy storage material. The heat will gradually spread through the energy storage material. The heat can further be distributed in the energy storage material by transport (circulation) of the heated heat transport fluid through the rest of the tubular elements. The circulating unit is preferably configured to spread the heat transport fluid heated in the one or more tubular elements over all tubular elements by means of circulation.

In a second mode of use, in which heat is extracted from the energy storage material, the system of tubular elements and/or the circulating unit is controlled to transport the thermal energy in controlled manner to for instance a steam generator of an electric power station.

The reservoir is constructed on the ground, for instance a piece of land close to a power station. The reservoir comprises for instance a building or an area surrounded by walls or dikes in which a large number of tubular elements can be disposed. The tubular elements are embedded in energy storage material. The embedding is preferably such that the tubular elements are in direct contact with the energy storage material over essentially their whole outer surface in order to enable a good and efficient energy transfer to and from the energy storage material.

The system of tubular elements preferably forms a closed system whereby the heat transport fluid can be transported. The system can be provided in known manner with one or more expansion tanks for absorbing volume changes as a result of temperature variations of the fluid. The transport is realized by the circulating unit, which is for instance constructed from one or more pumps and/or one or more controllable valves arranged in the tubular elements. The circulating unit can be configured to transport the desired fluid in the desired direction as desired: in a first direction for heating the energy storage material and in a second, opposite direction for extracting heat from the reservoir.

According to a further embodiment, the system is embodied to generate in a second mode of use electrical energy from energy stored in the energy storage material. The system can comprise here an electrical energy generating unit which is connected to the system of tubular elements and which is configured to generate electrical energy from the heat transport fluid heated by the energy storage material and transported along the electrical energy generating unit.

The electrical energy temporarily stored in the reservoir in the form of heat can hereby be converted back into electrical energy. This electrical energy can in principle be generated at all times, without external hindrance such as due to the weather or the availability of sunlight, and without time delay, and provided to the users (for instance households or industry), for instance by supplying the electrical energy to the existing (high-voltage) electricity grid.

According to an embodiment, the system comprises:
- valves for controlling the fluid flow in at least a number of the tubular elements of the system of tubular elements. The valves can optionally be controlled by the control unit to be described below. It is hereby possible to set the temperature distribution of the energy storage material in the reservoir as desired.

According to an embodiment, the system comprises one or more pumps for pumping the fluid flow through at least a number of the tubular elements of the system of tubular elements.

These pumps can be used instead of or in addition to said valves in order to change the fluid flow as desired, for instance in order to set the temperature distribution of the energy storage material in the reservoir as desired or to extract heat from the system via the heat transport fluid in the second mode of use.

In an embodiment of the invention the system comprises at least a control unit embodied to selectively heat or allow selective heating of different tubular elements. This can for instance be done by sending electric current through selected tubular elements, so that the fluid flowing therein and the energy storage material present locally are heated. This control unit can also be coupled to the pumps and valves (to the extent these are present) in order to control the flow of the fluid through the tubular elements as desired.

In embodiments of the invention the electrical energy source comprises:
- an electrical energy conversion unit for converting heat into electrical energy;
- a fluid discharge for transporting relatively hot fluid from the system of tubular elements to the electrical energy conversion unit;
- a fluid supply for supplying relatively cold fluid from the electrical energy conversion unit to the system of tubular elements.

The reservoir is preferably bounded on one or more sides, and more preferably on all sides, by a thermal insulating layer so that little energy is lost due to heat transfer to the surrounding area. A particularly suitable insulating material is formed by porous stone. The insulating value of the insulating material for instance amounts to about 0.1 Watt/m °C.

In an embodiment the heat transport fluid is a liquid, preferably water.

In an embodiment the heat transport fluid is a gas, preferably steam.

A possible advantage of opting for water is that there are many known techniques and devices for controlling water flow. A possible advantage of opting for steam is that higher temperatures, up to for instance 500 degrees or even higher, are possible because the pressure need not be high, this in contrast to water. Because of this higher temperature it will be possible to store the same amount of energy in a smaller buffer. This will however also require a thicker insulating layer.

In embodiments of the invention all tubular elements can be electrically heatable. It is optionally also possible that only some of the tubular elements are electrically heatable. The temperature of the fluid leaving the reservoir further lies within a temperature range such that the fluid is directly suitable for driving the turbines of a regular electric power station. An example of such a temperature range for water is between 300 and 350 degrees Celsius. An example of such a temperature range for steam is above 400 degrees Celsius, preferably above 500 degrees Celsius.

According to another aspect of the invention, a method is provided for storing energy with the system described herein, according to the independent claim 14.

When demand for electricity picks up in a determined period, this electricity can be generated by making use of the thermal energy stored in the energy storage medium of the reservoir earlier. According to a determined embodiment, the method for instance comprises of heating the heat transport fluid with a heated part of the energy storage medium and driving a generator with the heated heat transport fluid to generate electricity.

Further advantages, features and details of the present invention will be elucidated with reference to the description of some embodiments thereof. Reference is made in the description to the accompanying figures, in which:
Figure 1 shows a schematic cross-sectional top view of an embodiment of a system according to the invention;
Figure 2 shows a schematic cross-sectional side view of the reservoir of the system of figure 1;
Figure 3 shows a schematic view of a possible arrangement of a medium transport tube in the reservoir; and
Figures 4A-4C show schematic views of alternative arrangements of medium transport tubes of the system.

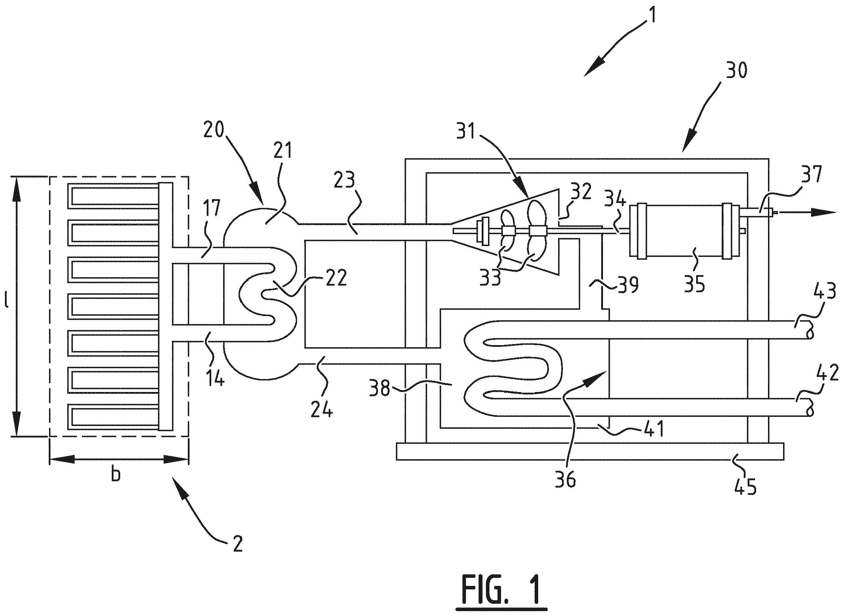

Figure 1 shows an embodiment of a system 1 for storing the electrical energy according to the invention. The system comprises an elongate reservoir 2 which is constructed from a base floor 3, a number of upright walls 4 and a roof 5. The floor and walls and the roof can be manufactured from any suitable material, for instance concrete. The reservoir can be covered with an earth cover layer (a) to conceal the reservoir from view, although this cover layer is not essential to the invention.

A thermal insulating layer 6 is arranged on the inner side of the walls, roof and base floor. This insulating layer has the function of ensuring that the heat stored in the inner space of the reservoir remains as far as possible inside the reservoir, and as little heat radiation as possible takes place to the surrounding area. The insulating layer can be manufactured from any suitable thermally insulating material. In a typical example the insulating layer is composed of porous stone, for instance specially treated furnace slag or the like. The insulation thickness can vary, but in determined examples the insulating layer is about 2 metres thick. If the system is intended to store energy long-term, for instance up to a year, a thicker insulating layer, up to for instance 5 metres thick, will be desirable.

A large quantity of energy storage material is arranged in the space surrounded by the insulating layers of the reservoir. The energy storage material consists particularly of granular material, such as (dry) sand or sand with grit. Pieces of basalt can advantageously also be used as energy storage material, particularly when mixed with crushed stone. The material has sufficient heat capacity per m³, a reasonable heat conduction and is resistant to high temperatures, such as higher than 500 degrees Celsius. This granular material is used to temporarily store energy in the form of heat therein. A system of a large number of tubular transport elements (for instance in the form of transport tubes) is arranged for this purpose in the granular material of the reservoir. These transport tubes are suitable for transporting a heat transport fluid such as water or gas. The heat transport fluid is transported through the transport tubes by means of one or more circulating units (not shown), such as one or more pumps, optionally in combination with suitable valve mechanisms for guiding the heat transport fluid through the correct transport tubes at a suitable moment.

The walls of the transport tubes take a thermally conductive form so that heat can be transferred from the energy storage material to the heat transport fluid or *vice versa* in simple manner. If the fluid in the heat transport tube is warmer than the surrounding energy storage material, heat is transferred from the fluid to the energy storage material. At this stage heat is stored in the reservoir for later use. At a stage in which the temperature of the energy storage material is higher than that of the fluid in the transport tubes, heat transfer from the energy storage material to the fluid in the transport tubes can take place. Heat can optionally be extracted from the reservoir at this stage. This heat can be absorbed by the fluid and be used to generate electrical energy.

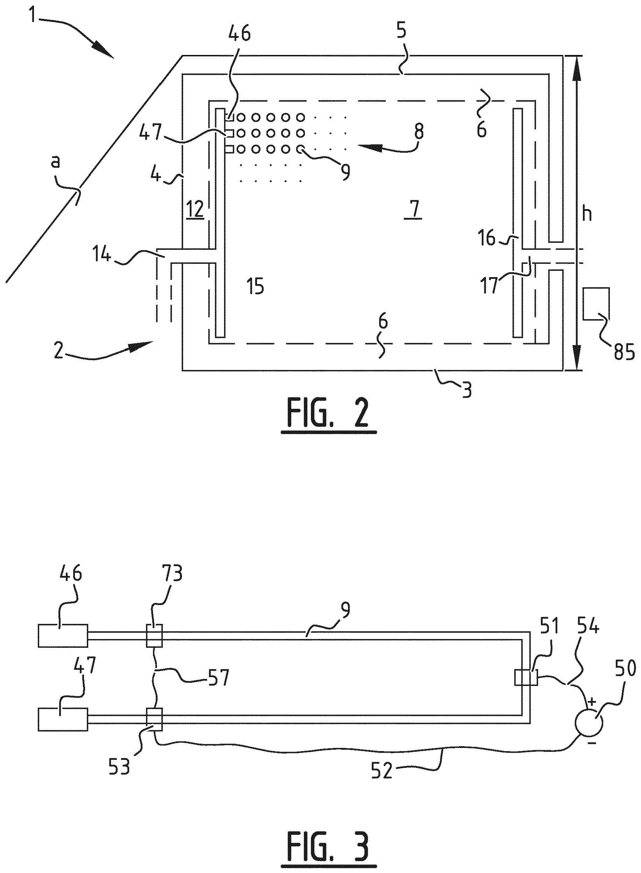

Figures 1 and 2 show an embodiment in which tube system 8 comprises a large number of rows and columns of parallel transport tubes 9. The transport tubes can all have the same dimensions, although variation in dimensions is also possible. Referring to figure 2, a supply collecting tube 12 which is connected to first distribution tubes 46, 47, which are connected to transport tubes 9, is provided on the left-hand side of the reservoir. Supply collecting tube 12 is connected to a supply tube 14. A discharge collecting tube 16 which is connected to second merging tubes 48 is likewise provided on the right-hand side of reservoir 2. Merging tubes 48 are connected to the opposite outer ends of transport tubes 9. Discharge collecting tube 16 is further connected to a discharge tube 17.

Discharge tube 17 and supply tube 14 are connected to a steam generator 20. Steam generator 20 comprises a housing which encloses a space 21. The fluid provides for the creation of steam in space 21. This superheated steam will drive steam turbine 31 for the purpose of the electric generator. It is important on the one hand to give the heat transport fluid in the tubes a high temperature such that it can be used in the steam generator directly in order to generate steam for conversion unit 30. The temperature should not be too high because the tubes generally become less firm at higher temperature and this, combined with pressure which, in the case of water, rapidly increases at certain temperatures, can cause deformation and possibly even breaking of tubes. The temperature should however not be too low either because insufficient steam pressure is otherwise produced to drive the turbine in efficient manner. A desired temperature range is set depending on the conditions and on the heat transport fluid used, for water for instance a temperature range of 300 to 350°C. When steam is used as heat transport fluid, the temperature can for instance be increased to 500°C, and in some cases even to higher temperatures. It is best to keep the temperature of the heat transfer fluid in this temperature range. If there is a danger of the temperature in the upper housing becoming too high, a flow of the heat transport fluid to one or more of the lower transport tubes will be generated.

Figure 3 shows a single transport tube with connecting elements 51, 53 and 56. Connecting elements 53 and 51 are connected to electric power source 50 via cables 54, 52. When the energy generated elsewhere is made available in the form of a direct voltage, the direct voltage can in theory be applied directly to the tubes. The direct voltage will in practice however usually already be converted into a (higher) alternating voltage at the source, and the electrical energy will be transported to the reservoir as alternating voltage. Power supply 50 produces an electric voltage applied over a predetermined resistor length of transport tube 9, wherein a switch is provided for either applying or not applying the voltage. One switch can for instance be provided per transport tube, although other options, such as grouping certain transport tubes, are also possible. Since the tube is manufactured from electrically conductive material, this voltage provides for a current through the tube. This current generates heat which will be transferred to the first heat transport fluid and energy storage material 7. Distribution of heat in the energy storage material can for instance be achieved via selectively applying or not applying a voltage over different tubes.

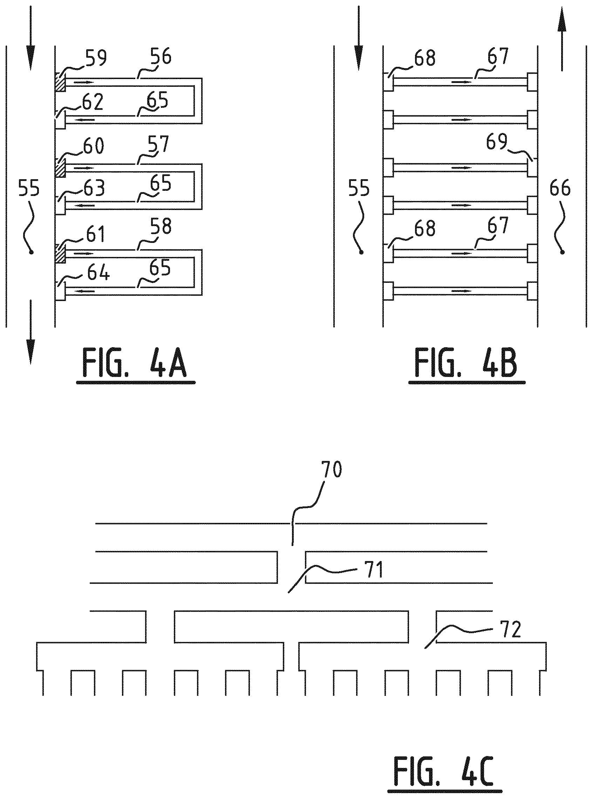

Figures 4A-4C show different options with which the circulation of the heat transport fluid in the system can be controlled. Figure 4A shows the situation in which a number of transport tubes 56-58 is connected to a central tube 55. The transport tubes can be opened and closed as desired using respective valve mechanisms 59-61 on the supply side and valve mechanisms 62-64 on the discharge side. Depending on the temperature in each of the transport tubes, the corresponding valve mechanisms can be switched on to guide medium from central tube 55 into the respective transport tube. Pump mechanisms can also replace or be added to the valve mechanisms. Figure 4B shows another arrangement of transport tubes 67. In this arrangement the heat transport fluid coming from central tube 55 does not return to central tube 55, but the heat transport fluid comes to lie directly in a second central tube 66. In this embodiment there are once again also valve mechanisms 68, 69 whereby the throughflow through the transport tubes can be controlled.

Figure 4C shows yet another embodiment of the invention. In this embodiment the heat transport fluid coming in via a central tube 70 is distributed via a number of branches 71 over a large number of parallel transport tubes 72. On the opposite ends of the reservoir the transport tubes can merge again in a central discharge tube. Suitable valve mechanisms and/or pump mechanisms, for instance valve mechanisms to enable control of the flow of the medium, can also be provided in this embodiment.

The valve mechanisms and pump mechanisms are preferably remotely controllable, for instance by a central control unit 85 (fig. 2), among other reasons because of the high temperatures and the inaccessibility. Depending on the temperature in the different transport tubes (which temperature is for instance measured via temperature sensors 65) the control unit can decide whether it is useful to allow flow of heat transport fluid through one or more of the transport tubes.

In an embodiment of the invention the control unit is embodied such that the flow of the medium through the tube system can be influenced subject to a number of measured temperature values at strategic positions in the system, for instance at a number of positions in the transport tubes.

The temperature can be brought to a sufficiently high value by direct heating of the heat transport fluid by means of conducting electric current through the transport tube wall and/or by means of heat transfer of the surrounding medium to these selected tubes. If the temperature in the fluid is however in danger of becoming too high, the control unit switches off the supply of fluid from these tubes and supplies fluid from other selected tubes which are not heated directly via current generation. These tubes are heated by heat transfer from the granular storage medium to the tube. In other embodiments the control unit can also provide for mixing of fluid coming from different components of the reservoir in order to keep the temperature of the fluid which is eventually carried to the flow generator within said temperature range.

By controlling the circulation of the medium in the conduit system correctly, a desired temperature distribution in the granular material of the reservoir can be realized at a given moment.

The dimensions of the reservoir can vary. To store a large amount of energy use can for instance be made of a reservoir with a length (1) of more than 250 m, a height (h) of more than 30 m and a width (b) of more than 200 m. The length of the transport tubes can then for instance amount to about 200 m, and the number of transport tubes is 60,000 or more (for instance in 80 rows/layers of 750 tubes).

The present invention is not limited to the embodiments thereof described herein. The rights sought are rather defined by the following claims, within the scope of which numerous modifications can be envisaged.

## Claims

1. System for storing electrical energy, the system comprising:
- a reservoir built or to be built on the ground;
- a quantity of energy storage material arranged in the reservoir;
- a system of tubular elements embedded in the energy storage material, wherein the tubular elements are manufactured from heat and electricity-conducting material;
- circulating unit for circulating a heat transport fluid through the tubular elements;
- a heating unit configured to convert electrical energy into heat in order to heat the heat transport fluid in the tubular elements, **characterised in that** the heating unit comprises a number of connecting elements which are attached to one or more of the tubular elements and which are configured to connect one or more of the tubular elements to at least one external electrical energy source, arranged such that an electric current can be carried over a predetermined length of the one or more tubular elements for the purpose of heating the one or more tubular elements in a first mode of use, transferring heat from the one or more tubular elements to the heat transport medium and transferring heat from the heated heat transport medium to the energy storage material for storage thereof in this material.

2. System as claimed in claim 1, wherein the circulating unit is configured to spread the heat transport fluid heated in the one or more tubular elements over all tubular elements by means of circulation and/or wherein the tubular elements are embedded in the energy storage material at substantially uniformly distributed positions.

3. System as claimed in any of the foregoing claims, wherein the system is embodied to generate in a second mode of use electrical energy from energy stored in the energy storage material, the system preferably comprising an electrical energy generating unit which is connected to the system of tubular elements and which is configured to generate electrical energy from heat transport fluid heated by the energy storage material and transported along the electrical energy generating unit.

4. System as claimed in any of the foregoing claims, comprising:
- valves for controlling the fluid flow in at least a number of the tubular elements of the system of tubular elements, and/or wherein the circulating unit comprises one or more pumps configured to pump the fluid flow through at least a number of the tubular elements of the system of tubular elements.

5. System as claimed in any of the foregoing claims, comprising a control unit embodied to selectively heat different tubular elements, wherein the control unit is preferably configured to provide a desired energy distribution in the reservoir.

6. System as claimed in any of the foregoing claims, comprising a control unit coupled to the heating unit, and preferably with valves and/or pumps, which control unit is configured to provide through controlling thereof a desired supply of heat to the heat storage material as a function of the position inside the reservoir and of the time.

7. System as claimed in any of the foregoing claims, wherein the heating unit comprises a control unit for selectively heating different tubular elements, wherein the control is preferably configured to provide a desired energy distribution in the reservoir, wherein the system preferably comprises a number of tubular elements arranged adjacently of and above each other.

8. System as claimed in any of the foregoing claims, wherein the system comprises a large number of tubular elements which are substantially straight and/or extend substantially parallel relative to each other.

9. System as claimed in any of the foregoing claims, configured to first heat a part of the energy storage material to at least a desired temperature using selected tubular elements and to then heat another part of the energy storage material, preferably configured to realize heating of the other part of the energy storage material by displacing the fluid from the tubular elements in the part of the energy storage material which has reached the desired temperature to tubular elements in another part of the energy storage material and/or preferably configured to realize heating of the other part of the energy storage material by applying an electric current over the length of one or more tubular elements in the other part of the energy storage material.

10. System as claimed in claim 4, comprising:
- a fluid discharge for transporting relatively hot fluid from the system of tubular elements to the electrical energy generating unit;
- a fluid supply for supplying relatively cold fluid from the electrical energy generating unit to the system of tubular elements, wherein the electrical energy generating unit preferably comprises a steam turbine which drives an electricity generator and/or wherein the electrical energy generating unit preferably comprises a steam generator for generating steam connected to the fluid discharge and wherein the turbine generator is configured to generate electrical energy from the steam.

11. System as claimed in any of the foregoing claims, wherein the heat transport fluid is a liquid, preferably water up to a maximum of 350 degrees Celsius, preferably in a temperature range between 300 and 350 degrees Celsius, or wherein the heat transport fluid is a gas, preferably steam, preferably of 500 degrees Celsius or more and/or wherein the energy storage material is formed by a quantity of granular material, particularly a quantity of sand, optionally with grit, or a quantity of basalt with crushed basalt stone.

12. System as claimed in any of the foregoing claims, wherein the reservoir is bounded on one or more sides, and preferably on all sides, by a thermal insulating layer, wherein the insulating layer preferably consists at least partially of porous stone and/or wherein the insulating layer is at least 2 metres thick, preferably at least 4 metres thick, still more preferably at least 6 metres thick.

13. System as claimed in any of the foregoing claims, wherein the number of tubular elements which can be heated via electric current amounts to more than 50%, preferably more than 90%, still more preferably 100% of the total number of tubular elements.

14. Method for storing energy with the system as claimed in any of the foregoing claims, the method comprising in a first mode of use for storing energy of:
- carrying current through one or more of the tubular elements for heating thereof and for heating thereby the heat transport fluid flowing in the tubular elements;
- circulating the heated heat transport fluid through the system of tubular elements;
- heating the energy storage medium by transferring heat from the heat transport fluid to the energy storage medium via the tube walls of the tubular elements.

15. Method as claimed in claim 14, wherein the method comprises in a second mode of use for extracting energy of heating the heat transport fluid with a heated part of the energy storage medium and of driving a generator with the heated heat transport fluid for generating electricity.

## Patentansprüche

1. System zur Speicherung von elektrischer Energie, wobei das System umfasst:
- ein Reservoir, das auf dem Boden gebaut ist oder gebaut werden soll;
- eine Menge an Energiespeichermaterial, die in dem Reservoir angeordnet ist;
- ein System von röhrenförmigen Elementen, die in das Energiespeichermaterial eingebettet sind, wobei die röhrenförmigen Elemente aus wärme- und stromleitendem Material hergestellt sind;
- Umwälzeinheit zum Umwälzen eines Wärmeträgerfluids durch die röhrenförmigen Elemente;
- eine Heizeinheit, die derart ausgestaltet ist, dass sie elektrische Energie in Wärme umwandelt, um das Wärmeträgerfluid in den röhrenförmigen Elementen zu erhitzen, **dadurch gekennzeichnet, dass**
die Heizeinheit mehrere Verbindungselemente umfasst, die an einem oder mehreren der röhrenförmigen Elemente angebracht sind und derart ausgestaltet sind, dass sie eines oder mehrere der röhrenförmigen Elemente mit mindestens einer externen elektrischen Energiequelle verbinden, die derart angeordnet ist, dass in einem ersten Betriebsmodus ein elektrischer Strom über eine vorbestimmte Länge des einen oder der mehreren röhrenförmigen Elemente zum Zweck des Erwärmens des einen oder der mehreren röhrenförmigen Elemente geleitet werden kann, und die Wärme von dem einen oder den mehreren röhrenförmigen Elementen auf das Wärmeträgermedium überträgt und Wärme von dem erhitzten Wärmeträgermedium auf das Energiespeichermaterial zu deren Speicherung in diesem Material überträgt.

2. System nach Anspruch 1, wobei die Umwälzeinheit derart ausgestaltet ist, dass sie das in dem einen oder den mehreren röhrenförmigen Elementen erwärmte Wärmeträgerfluid über alle röhrenförmigen Elemente mittels Umwälzung verteilt und/oder wobei die röhrenförmigen Elemente in dem Energiespeichermaterial bei im Wesentlichen gleichmäßig verteilten Positionen eingebettet sind.

3. System nach einem der vorstehenden Ansprüche, wobei das System ausgebildet ist, um in einem zweiten Betriebsmodus elektrische Energie aus Energie zu erzeugen, die in dem Energiespeichermaterial gespeichert ist, wobei das System vorzugsweise eine elektrische Energieerzeugungseinheit aufweist, die mit dem System der röhrenförmigen Elemente verbunden ist und die derart ausgestaltet ist, dass sie elektrische Energie aus Wärmeträgerfluid erzeugt, das durch das Energiespeichermaterial erwärmt und entlang der elektrischen Energieerzeugungseinheit transportiert wird.

4. System nach einem der vorstehenden Ansprüche, das umfasst:
- Ventile zum Steuern der Fluidströmung in mindestens mehreren der röhrenförmigen Elemente des Systems der röhrenförmigen Elemente, und/oder wobei die Umwälzeinheit eine oder mehrere Pumpen umfasst, die zum Pumpen des Fluidstroms durch mindestens mehrere der röhrenförmigen Elemente des Systems der röhrenförmigen Elemente ausgestaltet sind.

5. System nach einem der vorstehenden Ansprüche, das eine Steuereinheit umfasst, die ausgebildet ist, um unterschiedliche röhrenförmige Elemente selektiv zu erhitzen, wobei die Steuereinheit vorzugsweise derart ausgestaltet ist, dass sie eine gewünschte Energieverteilung in dem Reservoir bereitstellt.

6. System nach einem der vorstehenden Ansprüche, das eine Steuereinheit umfasst, die mit der Heizeinheit und vorzugsweise mit Ventilen und/oder Pumpen gekoppelt ist, wobei die Steuereinheit derart ausgestaltet ist, dass sie durch deren Steuerung eine gewünschte Wärmezufuhr zu dem Wärmespeichermaterial als eine Funktion der Position innerhalb des Reservoirs und der Zeit bereitstellt.

7. System nach einem der vorstehenden Ansprüche, wobei die Heizeinheit eine Steuereinheit zum selektiven Heizen verschiedener röhrenförmiger Elemente umfasst, wobei die Steuerung vorzugsweise derart ausgestaltet ist, dass sie eine gewünschte Energieverteilung in dem Reservoir bereitstellt, wobei das System vorzugsweise mehrere röhrenförmige Elemente umfasst, die nebeneinander und übereinander angeordnet sind.

8. System nach einem der vorstehenden Ansprüche, wobei das System eine große Anzahl von röhrenförmigen Elementen umfasst, die im Wesentlichen gerade sind und/oder sich im Wesentlichen parallel zueinander erstrecken.

9. System nach einem der vorstehenden Ansprüche, das derart ausgestaltet ist, dass es zuerst einen Teil des Energiespeichermaterials unter Verwendung ausgewählter röhrenförmiger Elemente auf mindestens eine gewünschte Temperatur erwärmt und dann einen anderen Teil des Energiespeichermaterials erwärmt, vorzugsweise derart ausgestaltet ist, dass es die Erwärmung des anderen Teils des Energiespeichermaterials dadurch realisiert, dass es das Fluids von den röhrenförmigen Elementen in dem Teil des Energiespeichermaterials, der die gewünschte Temperatur erreicht hat, zu röhrenförmigen Elementen in einem anderen Teil des Energiespeichermaterials verlagert, und/oder vorzugsweise derart ausgestaltet ist, dass es die Erwärmung des anderen Teils des Energiespeichermaterials dadurch realisiert, dass es einen elektrischen Strom über die Länge eines oder mehrerer röhrenförmiger Elemente in dem anderen Teil des Energiespeichermaterials anlegt.

10. System nach Anspruch 4, das umfasst:
- einen Fluidauslass zum Transportieren von relativ heißem Fluid von dem System von röhrenförmigen Elementen zu der elektrischen Energieerzeugungseinheit;
- eine Fluidzufuhr zum Zuführen von relativ kaltem Fluid von der elektrischen Energieerzeugungseinheit zu dem System von röhrenförmigen Elementen, wobei die elektrische Energieerzeugungseinheit vorzugsweise eine Dampfturbine umfasst, die einen Generator für Elektrizität antreibt, und/oder wobei die elektrische Energieerzeugungseinheit vorzugsweise einen Dampfgenerator zum Erzeugen von Dampf umfasst, der mit dem Fluidauslass verbunden ist, und wobei der Turbinengenerator derart ausgestaltet ist, dass er elektrische Energie aus dem Dampf erzeugt.

11. System nach einem der vorstehenden Ansprüche, wobei das Wärmeträgerfluid eine Flüssigkeit ist, vorzugsweise Wasser in einer Temperatur bis zu einem Maximum von 350 Grad Celsius, vorzugsweise in einem Temperaturbereich zwischen 300 und 350 Grad Celsius, oder wobei das Wärmeträgerfluid ein Gas ist, vorzugsweise Dampf, vorzugsweise mit einer Temperatur von 500 Grad Celsius oder mehr und/oder wobei das Energiespeichermaterial aus einer Menge an körnigem Material, insbesondere einer Menge an Sand, gegebenenfalls mit Grieß, oder aus einer Menge an Basalt mit gebrochenem Basaltstein gebildet wird.

12. System nach einem der vorstehenden Ansprüche, bei dem das Reservoir an einer oder mehreren Seiten und vorzugsweise an allen Seiten durch eine Wärmeisolierschicht begrenzt ist, wobei die Isolierschicht vorzugsweise zumindest teilweise aus porösem Stein besteht und/oder wobei die Isolierschicht mindestens 2 Meter dick, vorzugsweise mindestens 4 Meter dick, noch bevorzugter mindestens 6 Meter dick ist.

13. System nach einem der vorstehenden Ansprüche, wobei die Anzahl der röhrenförmigen Elemente, die durch elektrischen Strom erwärmt werden können, mehr als 50%, vorzugsweise mehr als 90%, noch mehr bevorzugt 100% der Gesamtanzahl der röhrenförmigen Elemente beträgt.

14. Verfahren zum Speichern von Energie mit dem System nach einem der vorstehenden Ansprüche, wobei das Verfahren in einem ersten Betriebsmodus zum Speichern von Energie umfasst:
- Leiten von Strom durch eines oder mehrere der röhrenförmigen Elemente zu deren Heizen und dabei zum Heizen des Wärmeträgerfluids, das in den röhrenförmigen Elementen fließt;
- Umwälzen des erwärmten Wärmeträgerfluids durch das System von röhrenförmigen Elementen;
- Erwärmen des Energiespeichermediums durch Übertragen von Wärme von dem Wärmeträgerfluid auf das Energiespeichermedium über die Rohrwände der röhrenförmigen Elemente.

15. Verfahren nach Anspruch 14, wobei das Verfahren in einem zweiten Betriebsmodus zum Extrahieren von Energie umfasst: Erwärmen des Wärmeträgerfluids mit einem erhitzten Teil des Energiespeichermediums und Antreiben eines Generators mit dem erhitzten Wärmeträgerfluid zum Erzeugen von Elektrizität.

## Revendications

1. Système pour le stockage d'énergie électrique, le système comprenant:
- un réservoir construit ou à construire sur le sol;
- une quantité de matière de stockage d'énergie agencée dans le réservoir;
- un système d'éléments tubulaires noyés dans la matière de stockage d'énergie, dans lequel les éléments tubulaires sont fabriqués à partir de chaleur et de matériau conducteur électrique;
- une unité de circulation pour faire circuler un fluide de transport de chaleur à travers les éléments tubulaires;
- une unité de chauffage configurée pour convertir l'énergie électrique en chaleur afin de chauffer le fluide de transport de chaleur dans les éléments tubulaires, **caractérisé en ce que**
l'unité de chauffage comprend un nombre d'éléments de liaison qui sont fixés à un ou plusieurs des éléments tubulaires et qui sont configurés pour relier un ou plusieurs des éléments tubulaires à au moins une source d'énergie électrique externe, agencés de telle sorte qu'un courant électrique puisse être acheminé sur une longueur prédéterminée des un ou plusieurs éléments tubulaires dans le but de chauffer les un ou plusieurs éléments tubulaires dans un premier mode d'utilisation, de transférer la chaleur des un ou plusieurs éléments tubulaires au milieu de transport de chaleur et de transférer la chaleur du milieu de transport de chaleur chauffé à la matière de stockage d'énergie pour son stockage dans cette matière.

2. Système selon la revendication 1, dans lequel l'unité de circulation est configurée pour étaler le fluide de transport de chaleur chauffé dans les un ou plusieurs éléments tubulaires sur tous les éléments tubulaires au moyen d'une circulation et/ou dans lequel les éléments tubulaires sont noyés dans la matière de stockage d'énergie à des positions réparties de manière sensiblement uniforme.

3. Système selon l'une quelconque des revendications précédentes, dans lequel le système est intégré pour générer dans un second mode d'utilisation de l'énergie électrique à partir d'énergie stockée dans la matière de stockage d'énergie, le système comprenant de préférence une unité de génération d'énergie électrique qui est reliée au système d'éléments tubulaires et qui est configurée pour générer de l'énergie électrique à partir du fluide de transport de chaleur chauffé par la matière de stockage d'énergie et transporté le long de l'unité de génération d'énergie électrique.

4. Système selon l'une quelconque des revendications précédentes, comprenant:
- des soupapes destinées à commander l'écoulement de fluide dans au moins un nombre des éléments tubulaires du système d'éléments tubulaires, et/ou dans lequel l'unité de circulation comprend une ou plusieurs pompes configurées pour pomper l'écoulement de fluide à travers au moins un nombre des éléments tubulaires du système d'éléments tubulaires.

5. Système selon l'une quelconque des revendications précédentes, comprenant une unité de commande intégrée pour chauffer sélectivement des éléments tubulaires différents, dans lequel l'unité de commande est de préférence configurée pour fournir une distribution d'énergie souhaitée dans le réservoir.

6. Système selon l'une quelconque des revendications précédentes, comprenant une unité de commande couplée à l'unité de chauffage, et de préférence avec des soupapes et/ou des pompes, laquelle unité de commande est configurée pour fournir par le biais de sa commande un apport de chaleur souhaité à la matière de stockage d'énergie en fonction de la position à l'intérieur du réservoir et du temps.

7. Système selon l'une quelconque des revendications précédentes, dans lequel l'unité de chauffage comprend une unité de commande pour chauffer sélectivement des éléments tubulaires différents, dans lequel la commande est de préférence configurée pour fournir une distribution d'énergie souhaitée dans le réservoir, dans lequel le système comprend de préférence un certain nombre d'éléments tubulaires agencés de manière adjacente à et au-dessus des uns des autres.

8. Système selon l'une quelconque des revendications précédentes, dans lequel le système comprend un grand nombre d'éléments tubulaires qui sont sensiblement droits et/ou s'étendent sensiblement parallèlement les uns aux autres.

9. Système selon l'une quelconque des revendications précédentes, configuré pour chauffer en premier lieu une partie de la matière de stockage d'énergie à au moins une température souhaitée à l'aide d'éléments tubulaires sélectionnés puis chauffer une autre partie de la matière de stockage d'énergie, de préférence configuré pour réaliser le chauffage de l'autre partie de la matière de stockage d'énergie par déplacement du fluide depuis les éléments tubulaires dans la partie de la matière de stockage d'énergie qui a atteint la température souhaitée vers des éléments tubulaires dans une autre partie de la matière de stockage d'énergie et/ou de préférence configuré pour réaliser un chauffage de l'autre partie de la matière de stockage d'énergie par application d'un courant électrique sur la longueur des un ou plusieurs éléments tubulaires dans l'autre partie de la matière de stockage d'énergie.

10. Système selon la revendication 4, comprenant:
- une évacuation de fluide destinée à transporter un fluide relativement chaud du système d'éléments tubulaires à l'unité de génération d'énergie électrique;
- un apport de fluide destiné à apporter un fluide relativement froid de l'unité de génération d'énergie électrique au système d'éléments tubulaires, dans lequel l'unité de génération d'énergie électrique comprend de préférence une turbine à vapeur qui entraîne un générateur d'électricité et/ou dans lequel l'unité de génération d'énergie électrique comprend de préférence un générateur de vapeur destiné à générer de la vapeur relié à l'évacuation de fluide et dans lequel le générateur à turbine est configuré pour générer l'énergie électrique à partir de la vapeur.

11. Système selon l'une quelconque des revendications précédentes, dans lequel le fluide de transport de chaleur est un liquide, de préférence de l'eau jusqu'à un maximum de 350 degrés Celsius, de préférence dans une plage de températures comprises entre 300 et 350 degrés Celsius, ou dans lequel le fluide de transport de chaleur est un gaz, de préférence de la vapeur, de préférence à 500 degrés Celsius ou plus et/ou dans lequel la matière de stockage d'énergie est formée par une quantité de matière granulaire, en particulier une quantité de sable, facultativement avec du gravier, ou une quantité de basalte avec de la pierre de basalte broyée.

12. Système selon l'une quelconque des revendications précédentes, dans lequel le réservoir est délimité sur un ou plusieurs côtés, et de préférence sur tous les côtés, par une couche isolante thermique, dans lequel la couche isolante est de préférence constituée au moins partiellement de pierre poreuse et/ou dans lequel la couche isolante est épaisse d'au moins 2 mètres, de préférence épaisse d'au moins 4 mètres, de manière encore davantage préférée épaisse d'au moins 6 mètres.

13. Système selon l'une quelconque des revendications précédentes, dans lequel le nombre d'éléments tubulaires qui peut être chauffé par le biais du courant électrique s'élève à plus de 50 %, de préférence plus de 90 %, de manière encore davantage préférée de 100 % du nombre total d'éléments tubulaires.

14. Procédé de stockage d'énergie avec le système tel que revendiqué dans l'une quelconque des revendications précédentes, le procédé comprenant dans un premier mode d'utilisation de stockage d'énergie:
- l'acheminement d'un courant à travers un ou plusieurs des éléments tubulaires pour leur chauffage et ainsi chauffer le fluide de transport de chaleur s'écoulant dans les éléments tubulaires;
- la circulation du fluide de transport de chaleur chauffé à travers le système d'éléments tubulaires;
- le chauffage du milieu de stockage d'énergie par transfert de chaleur du fluide de transport de chaleur au milieu de stockage d'énergie par le biais des parois de tube des éléments tubulaires.

15. Procédé selon la revendication 14, dans lequel le procédé comprend dans un second mode d'utilisation pour extraire de l'énergie de chauffage le fluide de transport de chaleur avec une partie chauffée du milieu de stockage d'énergie et d'entraînement d'un générateur avec le fluide de transport de chaleur chauffé pour générer de l'électricité.
